## Europäisches Patentamt
## European Patent Office
## Office européen des brevets

(19)

(11) Veröffentlichungsnummer : **0 088 069**
**B1**

(12) **EUROPÄISCHE PATENTSCHRIFT**

(45) Veröffentlichungstag der Patentschrift :
15.04.87

(21) Anmeldenummer : 83890013.2

(22) Anmeldetag : 03.02.83

(51) Int. Cl.⁴ : **G 01 N 27/82, G 01 N 27/90**

(54) Verfahren zur Oberflächenprüfung von über dem Curie-Punkt heissem Stahlgut.

(30) Priorität : 11.02.82 AT 515/82

(43) Veröffentlichungstag der Anmeldung :
07.09.83 Patentblatt 83/36

(45) Bekanntmachung des Hinweises auf die Patenterteilung : 15.04.87 Patentblatt 87/16

(84) Benannte Vertragsstaaten :
BE DE FR GB IT SE

(56) Entgegenhaltungen :
CH-A- 443 576
DE-B- 2 457 670
DE-C- 939 387
US-A- 2 855 565
US-A- 3 430 133
US-A- 4 024 470
MESSEN + PRÜFEN/AUTOMATIK, Band 10, Nr. 11, November 1984 M. VOGT "Automatisierung zerstörungsfreier Prüfverfahren", Seiten 743-750
STAHL UND EISEN, Band 101, Nr. 18/81, 7. September 1981 K.G. BERGSTRAND et al. "Die Anwendung des Wirbelstromverfahrens bei der Überprüfung von Metalloberflächen bei Temperaturen um 1000 C" Seiten 57-62
STAHL UND EISEN, Band 101, Nr. 17/81, 24. August 1981 E. KLOTH "Übersicht: Entwicklungsstand der Oberflächenprüfung von Brammen" Seiten 51-53

(73) Patentinhaber : VOEST-ALPINE Aktiengesellschaft
Werksgelände
A-4010 Linz (AT)

(72) Erfinder : Die Erfinder haben auf ihre Nennung verzichtet

(74) Vertreter : Wolfram, Gustav, Dipl.-Ing.
Schwindgasse 7 P.O. Box 205
A-1041 Wien (AT)

## Beschreibung

Die Erfindung betrifft ein Verfahren zur Oberflächenprüfung von über dem Curie-Punkt heißem Stahlgut, insbesondere zum kontinuierlichen Oberflächenprüfen von stranggegossenen Stahlsträngen, wobei die Oberflächenschicht des Stahlgutes an der zu prüfenden Oberfläche auf eine Temperatur unterhalb des Curie-Punktes abgekühlt wird, während die Temperatur des Kerns des Stahlgutes über dem Curie-Punkt verbleibt, worauf unmittelbar danach in der abgekühlten Oberflächenschicht ein Feld induziert wird und durch Fehlstellen, insbesondere Risse, im Stahlgut verursachte Beeinflussungen des induzierten Feldes mittels Aufnehmer festgestellt und aufgezeichnet werden.

Ein Verfahren dieser Art ist aus der CH-A-443 576 bekannt. Es betrifft ein Verfahren zum Ankoppeln von Ultraschall an heißes Metall mittels einer Flüssigkeit. Hierbei muß sorgfältig darauf geachtet werden, daß eine Dampfbildung vermieden wird, da sonst die Schallübertragung in das Metall gehemmt und eine Fehlerfeststellung unmöglich gemacht wird.

Um eine Dampfbildung zu vermeiden, ist die Oberflächentemperatur des heißen Metalles beim Ankoppeln auf unter 125 °C abzukühlen. Eine Abkühlung von einer Temperatur von über 1 000 °C auf unter 125 °C ist für bestimmte Stahlqualitäten nachteilig, und es kann eine Dampfbildung trotz dieser Kühlung nicht zuverlässig vermieden werden, insbesondere dann nicht, wenn das zu prüfende Metall eine gewisse Dicke überschreitet. Die Einhaltung der Obergrenze von 125 °C wirft weiters spezielle Probleme auf, nämlich u. a. einen enormen Kühlmittelbedarf sowie die Zuführung und Abführung der großen Kühlmittelmenge.

Aus diesem Grund hat sich das Ultraschallprüfverfahren gemäß der CH-A-443 576 zum Prüfen von sehr heißem Gut — wie Gießhitze aufweisendem stranggegossenem Material — nicht durchgesetzt ; es kann in der Praxis höchstens für Stahlgut Verwendung finden, dessen Temperatur 500 °C nicht übersteigt, also auf jeden Fall eine Temperatur unter dem Curie-Punkt aufweist.

Für die Oberflächenprüfung von heißen Brammen sind verschiedene Verfahren bekannt (Stahl und Eisen, 101, 1981, Seiten 1135 bis 1137 und 1183 bis 1188), jedoch hat sich keines dieser Verfahren betrieblich durchsetzen können.

Im Dokument Stahl und Eisen, 101, Seiten 1135 bis 1137, sind die optischen Verfahren als für heiße Brammen noch am besten geeignete beschrieben. Die optischen Verfahren lassen jedoch keine Unterscheidung zwischen harmlosen Unregelmäßigkeiten der Brammenoberfläche von echten Fehlern, die erst von einer gewissen Größe (Länge und Breite) an als solche erkannt werden können, zu. Weiters ist es unmöglich, Fehlertiefen zu erfassen und verdeckte Fehler unter der Oberfläche aufzufinden.

Aus diesem Dokument sind weiters u. a. das magnetische Streufluß-Verfahren und das Wirbelstrom-Verfahren bekannt, wobei jedoch erhebliche technische Schwierigkeiten bei der praktischen Anwendung dieser Verfahren aufgezeigt werden.

Für heiße Brammen ist das Wirbelstrom-Verfahren beschrieben, wobei jedoch ausgeführt ist, daß sich in der praktischen Anwendung dieses Verfahrens wesentliche Nachteile zeigen, die bedingt sind durch die Verschlechterung des Signal-Rausch-Verhältnisses, durch die Rauheit der Prüffläche sowie durch magnetische Inhomogenitäten, die aber auch in Kühlproblemen der in unmittelbarer Nähe der heißen Oberflächen befindlichen Prüfsonden ihre Ursachen haben.

Das magnetische Streufluß-Verfahren ist in diesem Dokument für über dem Curie-Punkt heißes Stahlgut als nicht verwendbar beschrieben, da es ferromagnetisches Material voraussetzt.

Die Erfindung bezweckt die Vermeidung der Nachteile der bekannten Verfahren und stellt sich die Aufgabe, ein Verfahren sowie eine Einrichtung zur Durchführung des Verfahrens zu schaffen, welche es ermöglichen, Fehler an heißem Stahlgut mit großer Sicherheit und Genauigkeit zu erkennen, u. zw. mit gleich großer Sicherheit wie bei kaltem Stahlgut, wobei jedoch ein Energieverlust, wie er beim Erkaltenlassen des Stahlgutes zur Prüfung und anschließenden Wiederaufheizen zum Weiterverarbeiten (z. B. Warmwalzen) auftritt, vermieden werden soll.

Diese Aufgabe wird bei dem Verfahren der eingangs genannten Art erfindungsgemäß dadurch gelöst, daß die Oberfläche des heißen Stahlgutes auf eine Temperatur bis etwa 500 °C, vorzugsweise auf eine Temperatur im Bereich zwischen 500 und 700 °C abgekühlt wird, wobei sich die Tiefe der unter den Curie-Punkt abgekühlten Oberflächenschicht des Stahlgutes mindestens bis 1 mm unter die Oberfläche des Stahlgutes erstreckt, und daß das induzierte Feld ein magnetisches oder elektromagnetisches Feld ist und berührungslos induziert wird.

Das intensive Abkühlen einer Oberflächenschicht auf eine Temperatur unterhalb des Curie-Punktes bewirkt zum einen, daß die zu prüfende Oberflächenschicht magnetisch homogen ist (es kann nicht vorkommen, daß Bereiche an den Kanten auf eine Temperatur unterhalb des Curie-Punktes abgekühlt sind und andere Bereiche in den Seitenflächen des Stahlgutes eine Temperatur oberhalb des Curie-Punktes aufweisen), und zum anderen, daß die das Feld induzierenden Einrichtungen sowie die Sonden bzw. Spulen zur Beeinflussung dieses Feldes wesentlich geringeren Temperaturen als bisher ausgesetzt sind, so daß durch zu starke Wärmebelastung dieser Einrichtungen verursachte Störungen vermieden werden. Durch die intensive Abkühlung einer nur dünnen Oberflächenschicht geht lediglich sehr wenig Energie des Stahlgutes verloren. Ein Einfluß auf die Materialeigenschaften ist, abgesehen von sehr wenigen hochlegierten Stahlsorten, nicht zu erkennen, da die intensiv abgekühlte Oberflächenschicht immer noch in einem Temperaturbereich für Weich- oder Spannungsfreiglühen liegt und sofort nach der Oberflächenprüfung vom Kern des Stahlgutes her auf etwa die Temperatur vor der Abkühlung wiedererwärmt wird.

Für stranggegossene Stahlstränge erfolgt das Abkühlen zweckmäßig unmittelbar nach Durcherstarren des Stranges. Eine Prüfung der stranggegossenen Stahlstränge kann aus Gründen höherer Gießgeschwindigkeit auch nach Unterteilen des Stranges in Abschnitte vorbestimmter Länge erforderlich sein, wobei in diesem Fall die das erfindungsgemäße Verfahren durchführende Einrichtung nach der Strangtrenneinrichtung angeordnet ist.

Die Erfindung ist anhand der Zeichnung an mehreren Ausführungsbeispielen näher erläutert, wobei Fig. 1 eine Seitenansicht und Fig. 2 einen Grundriß einer Einrichtung zur Durchführung des erfindungsgemäßen Verfahrens für stranggegossene Stahlstränge in jeweils schematischer Darstellung zeigen. In den Fig. 3, 4 und 5 sind verschiedene Verfahren zum Induzieren eines Feldes und Feststellen von dessen Beeinflussungen durch Fehlstellen näher veranschaulicht.

Mit 1 ist ein Strang mit Brammenquerschnitt bezeichnet, der aus einer Stranggießanlage, von der lediglich die endseitig vor dem Auslaufrollgang 2 angeordneten Treibwalzen 3 dargestellt sind, austritt. Nach Durchtritt des Stranges durch den von den Treibwalzen 3 gebildeten Spalt ist der Strang 1 bereits durcherstarrt und weist eine Oberflächentemperatur von in der Regel über 800 °C auf. Knapp nach den Treibwalzen 3 sind zwei sich quer zur Stranglängsachse 4 erstreckende Düsenbalken 5, u. zw. einer oberhalb und einer unterhalb des Stranges 1, für ein Kühlmittel, wie Wasser, in einem Gehäuse angeordnet. Das aus den Düsen 6 des Düsenbalkens 5 austretende Kühlmittel trifft auf die die Breitseiten 7 des Stranges 1 bildenden Strangoberflächen auf und kühlt diese auf eine Temperatur unterhalb des Curie-Punktes ab. Die Kühlmittelmenge wird in Abhängigkeit von der Stranggießgeschwindigkeit so gesteuert, daß eine Oberflächenschicht 8, deren Dicke zwischen 1 und 5 mm liegt, auf eine Temperatur unterhalb des Curie-Punktes abgekühlt wird, wobei die Temperatur der Breitseitenoberflächen 7 des Stranges 1 auf zwischen 500 und 700 °C abgekühlt wird. Während dieses intensiven Abkühlens ändert sich die Temperatur des Kernes 8' des Stahlgutes 7 nur unwesentlich ; er bleibt etwa gleich heiß.

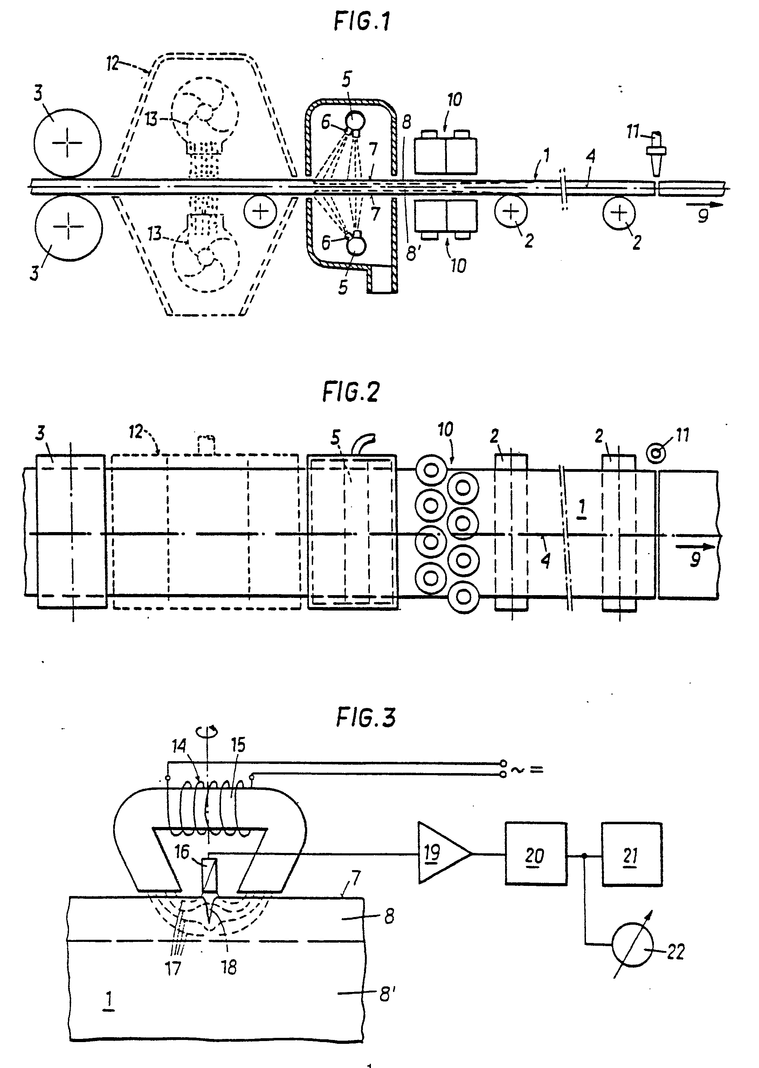

In Ausziehrichtung 9 ist unmittelbar nach den Düsenbalken 5 eine Einrichtung zum Induzieren eines Feldes und Feststellen von dessen Beeinflussungen durch Fehlstellen der Strangoberfläche angeordnet, die allgemein mit 10 bezeichnet ist und die nachfolgend anhand der Fig. 3 bis 6 näher erläutert ist. Anschließend an diese Einrichtung 10 ist die Strangtrenneinrichtung 11 zum Ablängen des Stranges 1 vorgesehen. Zwischen den auslaufseitigen Treibwalzen 3 und den Düsenbalken 5 ist es möglich, eine Entzunderungseinrichtung 12 anzuordnen, wobei diese Entzunderungseinrichtung, wie in Fig. 1 mit strichlierten Linien eingezeichnet, Schleuderräder 13 aufweist, die Stahlschrot od. dgl. auf die Breitseiten 7 des Stranges 1 schleudern. Die Entzunderung und intensive Kühlung können auch gleichzeitig durch ein Naßstrahlverfahren mit den Komponenten Strahlmittel, Wasser und Preßluft durchgeführt werden.

Einrichtungen 10 zur eigentlichen Fehlerfeststellung sind in den Fig. 3 bis 6 näher erläutert, wobei Fig. 3 das Hochenergie-Streufluß-Verfahren schematisch veranschaulicht. Eine Feldspule 14 eines rotierenden Joches 15 wird mit Gleich- oder Wechselstrom versorgt. Eine magnetfeldintensive Sonde ist mit 16 bezeichnet. Die vom Joch 15 in die Oberflächenschicht 8, die auf eine Temperatur unterhalb des Curie-Punktes abgekühlt ist und infolgedessen eine Permeabilität größer als « 1 » aufweist, induzierten Feldlinien sind mit den Bezugszeichen 17 versehen. Der durch einen Riß 18 in der Strangoberfläche 7 beeinflußte Feldlinienverlauf ist ebenfalls eingezeichnet. Von der magnetfeldintensiven Sonde 16 wird die Beeinflussung des Magnetfeldes durch den Riß 18 aufgenommen und über einen Verstärker 19 und ein Filter 20 an signalweiterverarbeitende bzw. anzeigende Geräte 21 oder 22 weitergeleitet.

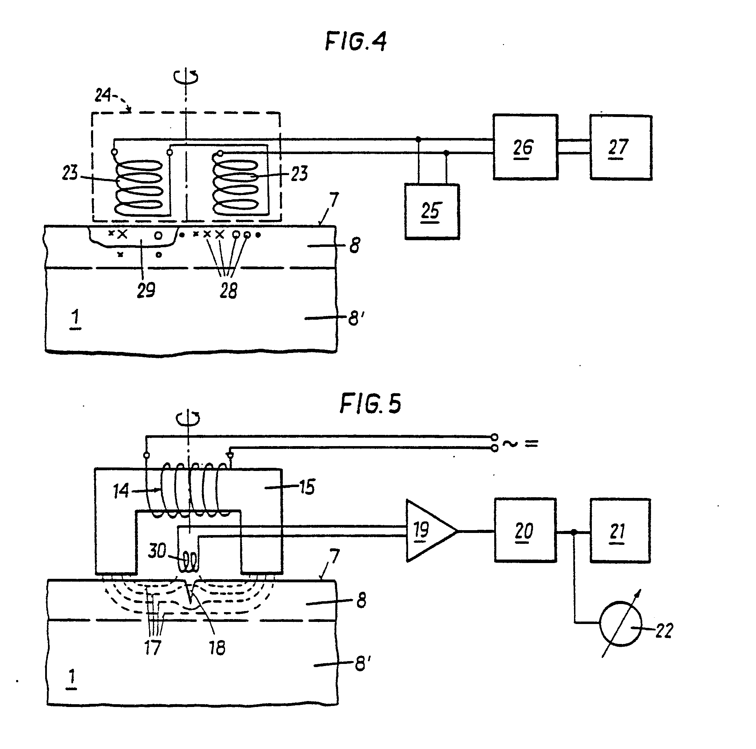

Das Wirbelstrom-Verfahren ist nachfolgend anhand der Fig. 4 näher erläutert. Spulen 23 sind in rotierenden und gekühlten Sonden 24 vorgesehen, wobei die Spulen 23 an einen Oszillator 25 sowie an eine Phasenmeßbrücke 26 oder Verstärker angeschlossen sind. Die ein Signal von den Spulen 23 weiterverarbeitenden bzw. anzeigenden Geräte sind schematisch veranschaulicht und mit 27 bezeichnet. Der induzierte Wirbelstrom 28 ist in Fig. 4 ebenfalls schematisch eingezeichnet. Seine Beeinflussung durch einen Fehler 29 in der Oberflächenschicht 8, die auf eine Temperatur unterhalb des Curie-Punktes abgekühlt ist, ist im linken Teil der Fig. 4 gezeigt.

Das magnetinduktive Verfahren ist in Fig. 5 veranschaulicht. Es entspricht im wesentlichen dem in Fig. 3 veranschaulichten Streufluß-Verfahren, jedoch ist statt einer magnetfeldintensiven Sonde eine Aufnehmerspule 30 vorgesehen.

**Patentansprüche**

1. Verfahren zur Oberflächenprüfung von über dem Curie-Punkt heißem Stahlgut (1), insbesondere zum kontinuierlichen Oberflächenprüfen von stranggegossenen Stahlsträngen (1), wobei die Oberflächenschicht (8) des Stahlgutes an der zu prüfenden Oberfläche (7) auf eine Temperatur unterhalb des Curie-Punktes abgekühlt wird, während die Temperatur des Kerns (8') des Stahlgutes über dem Curie-Punkt verbleibt, worauf unmittelbar danach in der abgekühlten Oberflächenschicht ein Feld induziert wird und durch Fehlstellen (18 ; 29 ; 34, 35), insbesondere Risse (18 ; 34), im Stahlgut (1) verursachte Beeinflussungen des induzierten Feldes mittels Aufnehmer (16 ; 23 ; 30 ; 31) festgestellt und aufgezeichnet werden, dadurch gekennzeichnet, daß die Oberfläche des heißen Stahlgutes (1) auf eine Temperatur bis etwa 500 °C, vorzugsweise auf eine Temperatur im Bereich zwischen 500 und 700 °C abgekühlt wird, wobei sich die Tiefe der unter den Curie-Punkt abgekühlten Oberflächenschicht (8) des Stahlgutes (1) mindestens bis 1 mm unter die Oberfläche (7) des Stahlgutes erstreckt, und daß das induzierte Feld ein magnetisches oder elektromagnetisches Feld (17 ; 28) ist und berührungslos induziert wird.

2. Verfahren nach Anspruch 1, für stranggegossene Stahlstränge, dadurch gekennzeichnet, daß das Abkühlen unmittelbar nach Durcherstarren des Stranges (1) durchgeführt wird.

**Claims**

1. A method for inspecting the surface of steel stock (1) having a temperature above the Curie point, in particular for continuously inspecting the surface of continuously cast steel strands (1), wherein the surface layer (8) of the steel stock, on the surface (7) to be inspected, is cooled to a temperature below the Curie point, while the temperature of the core (8') of the steel stock remains above the Curie point, whereupon, immediately thereafter, a field is induced in the cooled surface layer and influences on said induced field caused in said steel stock (1) by defects (18 ; 29 ; 34, 35), in particular cracks (18 ; 34), are determined and recorded by means of pick-ups (16 ; 23 ; 30 ; 31), characterised in that the surface of the hot steel stock (1) is cooled to a temperature down to about 500 °C, preferably to a temperature in the range of between 500 and 700 °C, the depth of the surface layer (8) of the steel stock (1) cooled to below the Curie point reaching to at least 1 mm below the surface (7) of

the steel stock, and that the induced field is a magnetic or electromagnetic field (17 ; 28) and is being induced without contact.

2. A method according to claim 1, for continuously cast steel strands, characterised in that cooling is effected immediately upon complete solidification of the strand (1).

**Revendications**

1. Procédé de contrôle superficiel d'un produit en acier (1) porté à une température supérieure au point de Curie, notamment pour le contrôle superficiel continu de barres d'acier (1) obtenues par coulée continue, dans lequel la couche superficielle (8) du produit d'acier est refroidie, dans la région de la surface (7) à contrôler, à une température inférieure au point de Curie, tandis que la température du cœur (8') du produit d'acier reste supérieure au point de Curie, après quoi, aussitôt après, un champ est induit dans la couche superficielle refroidie et les modifications du champ induit qui sont provoquées par des défauts (18 ; 29 ; 34, 35) en particulier par des fissures (18 ; 34) existant dans le produit en acier (1) sont détectées au moyen de capteurs (16 ; 23 ; 30 ; 31) et signalées, caractérisé en ce que la surface du produit en acier chaud (1) est refroidie à une température pouvant descendre jusqu'à environ 500 °C, de préférence à une température comprise dans l'intervalle entre 500 et 700 °C, la profondeur de la couche superficielle (8) du produit en acier (1) qui est refroidie au-dessous du point de Curie s'étendant au moins jusqu'à 1 mm au-dessous de la surface (7) du produit en acier et en ce que le champ induit est un champ magnétique ou électromagnétique (17 ; 28) et est induit sans contact matériel.

2. Procédé selon la revendication 1, pour barres d'acier obtenues par coulée continue, caractérisé en ce que le refroidissement est exécuté aussitôt après la solidification à cœur de la barre (1).

0 088 069

FIG.1

FIG.2

FIG.3

# FIG.4

# FIG.5